# EUROPÄISCHE PATENTANMELDUNG

(11) **EP 2 953 103 A1**
(43) Veröffentlichungstag der Anmeldung: **09.12.2015**
(21) Anmeldenummer: 14170826.3
(22) Anmeldetag: 02.06.2014
(51) Int. Cl.: G08B 17/06, G01K 7/18, G01K 7/20, G08B 17/103

(54) **Gefahrenmelder**

(71) Anmelder: Siemens Schweiz AG, 8047 Zürich (CH)
(72) Erfinder: Fischer, Martin, 8180 Bülach (CH); Imfeld, Berni, 8610 Uster (CH)
(74) Vertreter: Maier, Daniel Oliver

(57) **Zusammenfassung**

Verfahren zur Temperaturmessung anhand eines Gefahrenmelders (1), insbesondere anhand eines Brandmelders (1) mit den Schritten Einspeisung eines elektrischen Stromes durch mindestens eine Auswerteeinheit (7) über mindestens einen ersten (8a) und über mindestens einen zweiten (8b) elektrischen Anschluss in mindestens eine Leiterschleife (9a, 9b, 9c), die zumindest teilweise entlang eines Kreises, einer Ellipse oder eines regelmässigen Vielecks um einen Symmetriepunkt angeordnet ist, Messung innerhalb eines kontinuierlichen Bereichs an Widerstandswerten eines elektrischen Widerstands der mindestens einen Leiterschleife (9a, 9b, 9c) durch die mindestens eine Auswerteeinheit (7), Bestimmung der durchschnittlichen Temperatur der mindestens einen Leiterschleife (9a, 9b, 9c) anhand der Widerstandsmessung.

## Beschreibung

### Hintergrund

Die vorliegende Offenbarung bezieht sich auf Temperaturmessung, insbesondere auf Temperaturmessung in Gefahrenmeldern und/oder Brandmeldern und auf Sensoren im weitesten Sinn. Der Fokus dieser Anmeldung liegt auf einem richtungsunabhängigen Wärmesensor.

Bekannte Systeme zur Branderkennung basieren auf thermischer Branderkennung, auf optischer Branderkennung oder auf einer Kombination beider. Systeme zur thermischen Branderkennung müssen eine Reihe internationaler Normen (EN54-5, LPCB, UL, FM, etc.) erfüllen, darunter EN54-4, FM3210 und UL521.

Darin wird ein gleichmässiges Ansprechen des Brandmelders unter verschiedenen Winkeln gefordert. Mit anderen Worten, das Ansprechen des Gefahrenmelders sollte möglichst richtungsunabhängig erfolgen. Weiterhin wird eine rasche Reaktion des Gefahrenmelders bei verschiedensten Anstiegen der Temperatur pro Zeit verlangt. Die zu erfüllenden Anstiege der Temperatur liegen typisch zwischen 0.2 Kelvin pro Minute und 30 Kelvin pro Minute.

Die Erfüllung der oben genannten Kriterien ist in der Praxis vielfach eine Herausforderung. Gängige Sensorelemente sind NTC (negative thermal coefficient) Widerstände und werden als solche im Gehäuse eines Gefahrenmelders angeordnet. Das Gehäuse des Gefahrenmelders dient dem ebenfalls in den einschlägigen Normen geforderten mechanischen Schutz.

Die Anordnung eines Sensorelements innerhalb eines Gehäuses bedingt eine deutliche Verlangsamung des Ansprechverhaltens eines Brandmelders. Erschwerend kommt hinzu, dass neben dem Sensorelement meist weitere thermische Massen im Gehäuse des Brandmelders installiert sind. Das Problem des Einflusses weiterer thermischer Massen lässt sich zumindest teilweise durch eine geeignete Platzierung des Sensorelements kompensieren. Entsprechend wird das Sensorelement mit möglichst grossem Abstand von anderen beeinflussenden Elementen platziert.

Gefahrenmelder der neuesten Generation zeichnen sich durch eine besonders kompakte Bauweise aus. Eine besonders kompakte Bauweise eines Brand- oder Gefahrenmelders verringert die Geschwindigkeit und den räumlichen Verlauf konvektiver Luftströme im Gehäuse. Tatsächlich hängt das Ansprechverhalten eines (NTC-) Sensorelements stark ab von der Geschwindigkeit und von der Richtung dieser Luftströmungen. Gerade in Gefahrenmeldern mit kompakter Bauweise besteht deshalb die Gefahr eines stark richtungsabhängigen Ansprechens des Sensorelements.

Das US Patent US3406384 offenbart einen Brandmelder, welcher bifilare Leiter 12, 16 als Sensor zur Branderkennung einsetzt. Einer der Leiter 16 des Brandmelders aus US3406384 weist einen tiefen Schmelzpunkt von etwa 120 Grad Celsius auf. Im Falle eines Brandes schmilzt der Leiter 16 und öffnet den aus den bifilar angeordneten Leitern 12 und 16 bestehenden Stromkreis.

Die Leiter des Brandmelders aus US3406384 müssen nach einem Brand ausgetauscht oder zumindest repariert werden. Abbildung 5 zeigt die Verlegung einer Stromschleife aus bifilar angeordneten Leitern im Gebäude. Diese erfolgt anhand einer Vielzahl von Verbindungsstellen 54. Die Anordnung aus US3406384 basiert nach Spalte 4, Zeile 39, auf einem verzweigten Messkreis 1A, 1B. Die spezielle Form eines Messkreises ist nur schwer vereinbar mit einer kompakten Bauweise.

Ziel der vorliegenden Offenbarung ist die zumindest teilweise Überwindung der vorgenannten Schwierigkeiten. Es sollen Wege zur kompakten und richtungsunabhängigen Branderkennung aufgezeigt werden, welche den oben aufgezeigten Anforderungen gerecht werden.

### Zusammenfassung

Der vorliegenden Offenbarung liegt die Aufgabe zu Grunde, einen Gefahrenmelder, vorzugsweise einen Brandmelder, bereitzustellen, dessen thermischer Sensor richtungsunabhängig ist. Durch die Richtungsunabhängigkeit des thermischen Sensors verringert sich zugleich die Anfälligkeit des Sensors gegenüber Störungen. Weiterhin soll der thermische Sensor im oder am Gefahrenmelder schnell ansprechen und dennoch mechanisch geschützt sein.

Die genannten Aufgaben werden erfindungsgemäss gelöst durch Verwendung einer (bifilaren) Drahtschleife als thermisches Sensorelement. Die (bifilare) Drahtschleife wird dabei ringförmig am Gefahrenmelder angebracht.

Die genannte Aufgabe wird gelöst durch einen Gefahrenmelder, vorzugsweise durch einen Brandmelder, gemäss dem unabhängigen Anspruch dieser Offenbarung. Weitere vorteilhafte Ausführungsformen werden durch die abhängigen Ansprüche abgedeckt.

Ein weiterer Gegenstand der vorliegenden Offenbarung besteht darin, einen Gefahrenmelder bereitzustellen, dessen thermisches Sensorelement kostengünstig auf einer (Printed Circuit Board)-Platine angebracht werden kann.

Ein weiterer Gegenstand der vorliegenden Offenbarung besteht darin, einen Gefahrenmelder bereitzustellen, dessen thermisches Sensorelement ein möglichst gutes Signal-RauschVerhältnis aufweist.

Ein weiterer Gegenstand der vorliegenden Offenbarung liegt darin, einen Gefahrenmelder mit einem thermischen Sensorelement bereitzustellen, welches möglichst unempfindlich gegenüber elektro-magnetischer Einkopplung ist.

Ein weiterer Gegenstand der vorliegenden Offenbarung liegt darin, einen Gefahrenmelder mit einer Auswerteelektronik bereitzustellen, sodass selbst geringe Temperaturänderungen zuverlässig detektiert werden können.

Ein weiterer Gegenstand der vorliegenden Offenbarung liegt darin, einen Gefahrenmelder bereitzustellen, dessen thermisches Sensorelement gleichzeitig zur Datenübertragung mit Radiowellen genutzt werden kann.

Ein weiterer Gegenstand der vorliegenden Offenbarung liegt darin, eine Gefahrenmeldeanlage bestehend aus Brandmeldern und/oder Gefahrenmeldern gemäss vorliegender Offenbarung bereitzustellen.

### Kurze Beschreibung der Zeichnung

Verschiedene Merkmale der vorliegenden Offenbarung werden dem Fachmann anhand der folgenden detaillierten Beschreibung von Ausführungsformen aufgezeigt. Die Ausführungsformen sind dabei nicht einschränkend. Die Zeichnung der vorliegenden Offenbarung wird kurz wie folgt beschrieben:

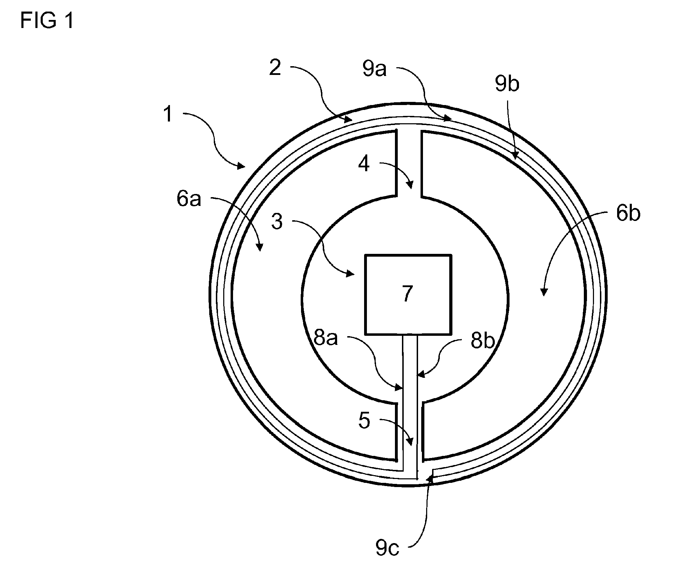

FIG 1 zeigt einen Gefahrenmelder mit einem Temperatursensor gemäss der vorliegenden Offenbarung.

### Detaillierte Beschreibung

FIG 1 zeigt einen Brandmelder 1. Der Brandmelder besteht aus zwei konzentrisch angeordneten Platinen 2, 3, welche über Stege 4, 5 miteinander verbunden sind. Die Zwischenräume 6a, 6b zwischen den konzentrisch angeordneten Platinen 2, 3 sind vorzugsweise nicht ausgefüllt.

Die in FIG 1 gezeigte Ausführungsform weist zwei Stege 4, 5 auf. In einer weiteren Ausführungsform ist nur ein Steg zur mechanischen Verbindung der inneren 3 und der äusseren 2 Platinen vorhanden. In wiederum einer weiteren Ausführungsform sind mehr als zwei Stege um die innere Platine 3 angeordnet und verbinden so die innere 3 mit der äusseren 2 Platine.

Auf der zentralen Platine 3 ist eine Auswerteeinheit 7 angeordnet. Die Auswerteeinheit 7 umfasst vorzugsweise einen oder mehrere Sensoren, ein Display, einen oder mehrere Prozessoren, Speicher etc. Die Auswerteeinheit kann auch für Steuerungsaufgaben geeignet sein. Die Auswerteeinheit 7 umfasst ferner eine Energieversorgung und/oder Kontakte zur Energieversorgung.

In wiederum einer weiteren Ausführungsform gibt es keine Zwischenräume 6a, 6b, sodass die innere 3 Platine und die äussere 2 Platine eine gemeinsame Platine bilden.

Zwei Kontakte 8a, 8b sind über den Steg 5 von der Auswerteeinheit 7 auf die äussere Platine 2 geführt. Die Kontakte 8a, 8b sind vorzugsweise als Leiterbahnen auf dem als Printed Circuit Board (PCB) ausgeführten Steg 5 angeordnet.

Die Kontakte 8a, 8b kontaktieren im Bereich der inneren Platine 3 die Auswerteeinheit 7 elektrisch. Die Kontakte kontaktieren im Bereich der äusseren Platine 2 die Leiterschleife 9a, 9b, 9c elektrisch. Es liegt mithin ein Stromkreis vor, der von der Auswerteeinheit 7 ausgehend über die Kontakte 8a, 8b geführt wird und durch die Leiterschleife 9a, 9b, 9c geschlossen wird.

In einer weiteren Ausführungsform wird die Leiterschleife 9a, 9b, 9c über den Steg 4 kontaktiert. In noch einer weiteren Ausführungsform wird die Leiterschleife 9a, 9b, 9c über beide Stege 4 und 5 kontaktiert.

Die Leiterschleife besteht aus zwei bifilar angeordneten Leiterbahnen 9a, 9b. An ihrem einem Ende wird die Leiterbahn durch ein Schlussstück 9c abgeschlossen. Die Ausführungsform aus FIG 1 zeigt beide bifilare Leiter 9a, 9b auf derselben Seite der Platine 2. In einer weiteren Ausführungsform sind die bifilaren Leiter 9a, 9b auf gegenüberliegenden Seiten der Platine 2 angeordnet. Demnach verläuft ein Leiter 9a auf der Oberseite der Platine 2 und der andere Leiter 9b auf der Unterseite der Platine 2. Das Abschlussstück 9c verbindet in diesem Fall Leiter 9a, 9b auf gegenüberliegenden Seiten der Platine 2. Dazu kann das Abschlussstück beispielsweise um die Platine 2 aussen herum verlegt werden und/oder anhand einer Bohrung durch die Platine geführt sein.

Die beiden Leiter 9a, 9b sind bis auf deren Verbindung mit den Kontakten 8a, 8b und bis auf das Abschlussstück 9c konzentrisch um die zentrale Platine 3 angeordnet. In einer bevorzugten Ausführungsform verlaufen die bifilaren Leiter 9a, 9b bis auf deren Verbindung mit den Kontakten 8a, 8b und bis auf das Abschlussstück 9c entlang Kreisbahnen um die zentrale Platine 3. Die Anordnung in einer Kreisbahn ist besonders vorteilhaft im Hinblick auf die Richtungsunabhängigkeit des thermischen Sensors.

In einer weiteren bevorzugten Ausführungsform sind die bifilaren Leiter 9a, 9b elliptisch, dreieckig, quadratisch oder allgemein in einem Vieleck um die innere Platine 3 angeordnet. Gemäss noch einer weiteren Ausführungsform sind die bifilaren Leiter 9a, 9b nicht exakt konzentrisch mit der inneren Platine 3. Stattdessen ist in jener Ausführungsform die innere Platine 3 aus dem Zentrum der äusseren Platine 2 herausgerückt, beispielsweise über unterschiedlich lange Stege 4, 5.

Der Gefahrenmelder hat die Temperatur im Raum möglichst gut zu erfassen und auch langsame Temperaturanstiege zu messen. Dazu wird die Leiterschleife 9a, 9b, 9c vorteilhaft möglichst nahe am Deckel des Gefahrenmelders angeordnet. Die Leiterschleife 9a, 9b, 9c kann auch in Form einer leitfähigen oder halbleitenden ZnO- oder TiO₂-Schicht direkt auf dem Deckel aufgebracht werden. In diesem Fall befindet sich die Leiterschleife 9a, 9b, 9c nicht auf einer Platine 2 unter dem Dekkel, sondern sie 9a, 9b, 9c ist in den Deckel integriert. Die Kontakte verlaufen dann beispielsweise als Drähte im Gehäuse von der Auswerteeinheit 7 zur Leiterschleife 9a, 9b, 9c im oder auf dem Deckel. Bei Anbringung der Leiterschleife auf der Oberfläche des Deckels des Gefahrenmelders wird diese 9a, 9b, 9c vorteilhaft mit einer Schutzschicht abgedeckt.

In einer weiteren Ausführungsform ist die Leiterschleife 9a, 9b, 9c eine einseitig oder zweiseitig beschichtete leitfähige Folie. Die leitfähig beschichtete Folie wird vorzugsweise im Gefahrenmelder 1 anhand eines Schlitzes möglichst kreisförmig ausgebildet.

Detektiert wird bei der Temperaturmessung die Änderung des elektrischen Widerstandes der Leiterschleife 9a, 9b, 9c als Funktion der Temperatur. Konkret geht es dabei um die Temperaturabhängigkeit des spezifischen elektrischen Widerstandes des Materials der Leiterschleife. Die Leiter 9a, 9b und das Abschlussstück 9c bestehen vorzugsweise aus Kupfer oder einer Kupferlegierung und sind als solche auf der Platine 2 aufgebracht. Typischerweise ist die Leiterschleife 9a, 9b, 9c zwischen 5 cm und 100 cm lang, vorzugsweise zwischen 10 cm und 40 cm lang. In einer Ausführungsform beträgt der Durchmesser der Leiterschleife 9a, 9b, 9c 0.01 bis 1 Millimeter, vorzugsweise 0.1 Millimeter. Der Widerstand der Leiterschleife 9a, 9b, 9c bei 25 Grad Celsius liegt dabei zwischen 10 und 2000 mOhm, vorzugsweise bei 200 mOhm.

Die Kontakte 8a, 8b der Leiterschleife 9a, 9b, 9c können dikker ausgeführt sein als die Leiterschleife 9a, 9b, 9c. In einer bevorzugten Ausführungsform betragen die Querschnitte der Kontakte 8a, 8b mindestens das Dreifache des (mittleren) Querschnitts der Leiterschleife 9a, 9b, 9c. In einer speziell bevorzugten Ausführungsform betragen die Querschnitte der Kontakte 8a, 8b mindestens das Zehnfache des (mittleren) Querschnitts der Leiterschleife 9a, 9b, 9c.

Anstelle von Kupfer können zur Temperaturmessung anhand der Leiterschleife 9a, 9b, 9c auch die Metalle Platin, Aluminium Eisen, Nickel, Silizium und/oder deren Legierungen eingesetzt werden. In einer weiteren Ausführungsform besteht die Leiterschleife 9a, 9b, 9c aus einem Heissleiter-Material.

Zur Bestimmung der Temperatur ist es wichtig, dass sich die Leiterschleife 9a, 9b, 9c während der Temperaturmessung möglichst wenig erwärmt. Deshalb ist es vorteilhaft, den Widerstand der Leiterschleife 9a, 9b, 9c zu messen, indem ein kurzer Strompuls in dieselbe eingespeist wird. Der Strompuls dauert zwischen 10 und 1000 Mikrosekunden, vorzugsweise 100 Mikrosekunden. Der Scheitelwert des Strompulses liegt zwischen 0.01 A und 5 A, vorzugsweise 0.5 A. Daraus resultiert bei einem typischen Kaltwiderstand von 200 mOhm bis 2000 mOhm ein Spannungsabfall von 0.1 V - 1 V.

Das Nutzsignal, d. h. die Temperaturabhängigkeit des Widerstandes ist implizit über die Materialkonstante des linearen Widerstandstemperaturkoeffizienten des Drahtes selbst definiert. Bei Kupfer beträgt dies Konstante 3.9·10⁻³/K.

Die eigentliche Signaländerung liegt im Bereich weniger mOhm pro Grad Celsius liegt und addiert sich zu einem Kaltwiderstand im Bereich von 1 Ohm bis 10 Ohm. Deshalb muss entweder ein Messverstärker oder ein hochauflösender A/D Wandler (im Bereich 12 bis 16 Bits) verwendet werden.

In einer bevorzugten Ausführungsform wird auf einen Messverstärker verzichtet. Das Signal wird dabei direkt einem Delta-Sigma A/D Wandler zugeführt. Eine aufwändige und teure Messverstärkerschaltung entfällt damit. Gleichzeitig kann das Nutzsignal mit einer hohen Genauigkeit vermessen werden. Delta-Sigma A/D Wandler sind darüber hinaus kostengünstig.

In einer weiteren besonders vorteilhaften Ausführungsform werden die Auswerteeinheiten 7 eines optischen und eines elektrischen 9a, 9b, 9c Temperatursensors kombiniert. In optisch-thermischen Meldern wird die eine lichtemittierende Diode mit Strömen um 0.5 A während typisch 100 Mikrosekunden gepulst. Es wird nun derselbe Puls, welcher für die lichtemittierende Diode verwendet wird, auch für die Temperaturmessung anhand Leiterschleife 9a, 9b, 9c eingesetzt. Damit ist ein sehr energieeffizientes Design möglich.

Nach einer vorteilhaften Ausführungsform wird der Leitungswidertand (der beispielsweise 200 mOhm bis 2000 mOhm betragen kann) als Strommesswiderstand für eine Konstantstromquelle gebraucht. Praktisch lässt sich dies realisieren als Emitterstufe mit dem Strommesswiderstand im Emitter und mit infraroter lichtemittierender Diode im Kollektor.

Nach einer weiteren bevorzugten Ausführungsform ist der Strommesswiderstand in einer Rückkopplungsanordnung mit Operationsverstärkern angeordnet. Damit lässt sich die Genauigkeit des Stromes erhöhen.

Eine Leiterschleife 9a, 9b, 9c in Form eines Kupfer- , Aluminium- oder Eisendrahtes lässt sich weiterhin vorteilhaft als Antenne für radiofrequente Signale mit nutzen. Vielfach kommt es vor, dass Gefahrenmelder mit anderen Geräten kommunizieren müssen, um beispielsweise einen Brand mitzuteilen. Dies geschieht vorteilhaft drahtlos anhand der Nutzung der Leiterschleife 9a, 9b, 9c als Antenne.

Das Genannte bezieht sich auf einzelne Ausführungsformen der Offenbarung. Verschiedene Änderungen an den Ausführungsformen können vorgenommen werden ohne von der zu Grunde liegenden Idee abzuweichen und ohne den Rahmen dieser Offenbarung zu verlassen. Der Gegenstand der vorliegenden Offenbarung ist definiert über deren Ansprüche. Es können verschiedenste Änderungen vorgenommen werden ohne den Schutzbereich der folgenden Ansprüche zu verlassen.

### Bezugszeichen

- 1: Gefahrenmelder, insbesondere Brandmelder
- 2: äussere Platine
- 3: innere Platine
- 4, 5: Stege
- 6a, 6b: Zwischenräume
- 7: Steuer- und Auswerteeinheit
- 8a, 8b: Kontakte
- 9a, 9b: Leiterbahnen
- 9c: Abschlussstück

## Patentansprüche

1. Eine Temperaturmessvorrichtung, insbesondere eine Temperaturmessvorrichtung eines Gefahrenmelders (1), umfassend
mindestens eine Auswerteeinheit (7),
mindestens eine Leiterschleife (9a,9b, 9c),
mindestens eine erste (8a) und mindestens eine zweite (8b) elektrische Verbindung, wobei die elektrischen Verbindungen (8a, 8b) zusammen mit der mindestens einen Auswerteeinheit (7) und der mindestens einen Leiterschleife (9a, 9b, 9c) einen elektrischen Stromkreis schliessen,
wobei die mindestens eine Leiterschleife (9a, 9b, 9c) zumindest teilweise entlang eines Kreises, entlang einer Ellipse oder entlang eines regelmässigen Vielecks um einen Symmetriepunkt angeordnet ist,
wobei die mindestens eine Auswerteeinheit (7) ausgebildet ist, mindestens zwei unterschiedliche und endliche Werte des elektrischen Widerstandes der mindestens einen Leiterschleife (9a, 9b, 9c) zu messen und daraus die durchschnittliche Temperatur der Leiterschleife (9a, 9b, 9c) zu bestimmen.

2. Die Temperaturmessvorrichtung nach Anspruch 1, wobei die elektrischen Verbindungen (8a, 8b) zwischen der mindestens einen Auswerteeinheit (7) und der mindestens einen Leiterschleife (9a, 9b, 9c) angeordnet sind.

3. Die Temperaturmessvorrichtung nach einem der Ansprüche 1 oder 2, wobei die mindestens eine erste elektrische Verbindungen (8a) und/oder die mindestens eine zweite elektrische Verbindung (8b) galvanisch mit der mindestens einen Leiterschleife (9a, 9b, 9c) verbunden sind/ist.

4. Die Temperaturmessvorrichtung nach einem der Ansprüche 1 bis 3, wobei mehr als drei Viertel, vorzugsweise mehr als neun Zehntel, der Länge der mindestens einen Leiterschleife (9a, 9b, 9c) entlang eines Kreises, entlang einer Ellipse oder entlang eines regelmässigen Vielecks um einen Symmetriepunkt angeordnet sind.

5. Die Temperaturmessvorrichtung nach einem der Ansprüche 1 bis 4, wobei die mindestens einen Leiterschleife (9a, 9b, 9c) derart entlang eines Kreises, entlang einer Ellipse oder entlang eines regelmässigen Vielecks um einen Symmetriepunkt angeordnet sind, dass der Gefahrenmelder (1) zur im Wesentlichen richtungsunabhängigen Temperaturmessung ausgebildet ist.

6. Die Temperaturmessvorrichtung nach einem der Ansprüche 1 bis 5, wobei die die Leiterschleife (9a, 9b, 9c) zwei bifilar angeordnete Leiter (9a, 9b) umfasst.

7. Die Temperaturmessvorrichtung nach einem der Ansprüche 1 bis 6, wobei die mindestens Leiterschleife (9a, 9b, 9c) ein Abschlussstück (9c) umfasst.

8. Die Temperaturmessvorrichtung nach einem der Ansprüche 1 bis 7, wobei der Gefahrenmelder (1) mindestens eine Platine (2) umfasst, auf welche die mindestens eine Leiterschleife (9a, 9b, 9c) aufgebracht ist.

9. Die Temperaturmessvorrichtung nach Anspruch 8, wobei die mindestens eine Leiterschleife (9a, 9b, 9c) teilweise (9a) auf der Oberseite und teilweise auf der Unterseite (9b) der mindestens einen Platine (2) aufgebracht ist.

10. Die Temperaturmessvorrichtung nach einem der Ansprüche 8 oder 9, wobei die mindestens Leiterschleife (9a, 9b, 9c) zumindest teilweise auf der mindestens einen Platine (2) aufgedruckt ist.

11. Die Temperaturmessvorrichtung nach einem der Ansprüche 1 bis 10, wobei der Gefahrenmelder (1) mindestens einen Deckel umfasst und wobei jeder Punkt entlang der Leiterschleife (9a, 9b, 9c) weniger als 5 cm, vorzugsweise weniger als 2 cm, von dem mindestens einen Deckel angeordnet ist.

12. Die Temperaturmessvorrichtung nach Anspruch 11, wobei der Gefahrenmelder (1) mindestens einen Deckel umfasst und wobei jeder Punkt entlang der Leiterschleife (9a, 9b, 9c) weniger als 1 cm, vorzugsweise weniger als 0.5 cm, von dem mindestens einen Deckel angeordnet ist.

13. Die Temperaturmessvorrichtung nach einem der Ansprüche 1 bis 12, wobei die mindestens eine Auswerteeinheit (7) ausgebildet ist, zur Temperaturmessung einen Strompuls mit einer Dauer von weniger als 1000 Mikrosekunden, vorzugsweise von weniger als 100 Mikrosekunden, in die mindestens eine Leiterschleife (9a, 9b, 9c) einzuspeisen und/oder die Auswerteeinheit (7) ausgebildet ist, zur Temperaturmessung einen Strompuls mit einem Scheitelwert von mehr als 0.01 A, vorzugsweise von mehr als 0.3 A, in die Leiterschleife (9a, 9b, 9c) einzuspeisen.

14. Die Temperaturmessvorrichtung nach Anspruch 13, wobei die Temperaturmessvorrichtung zusätzlich eine lichtemittierende Diode umfasst, welche im Zusammenhang mit einer optischen Messung von Rauchdichte verwendet werden kann, und wobei Leiterschleife (9a, 9b, 9c) und lichtemittierende Diode derart angeordnet sind, dass ein in die Leiterschleife eingespeister Strompuls zum Betrieb der lichtemittierenden Diode verwendet werden kann.

15. Verfahren zur Temperaturmessung mit den Schritten Einspeisung eines elektrischen Stromes durch mindestens eine Auswerteeinheit (7) über mindestens einen ersten (8a) und über mindestens einen zweiten (8b) elektrischen Anschluss in mindestens eine Leiterschleife (9a, 9b, 9c),
die zumindest teilweise entlang eines Kreises, entlang einer Ellipse oder entlang eines regelmässigen Vielecks um einen Symmetriepunkt angeordnet ist,
Messung innerhalb eines kontinuierlichen Bereichs an Widerstandswerten eines elektrischen Widerstands der mindestens einen Leiterschleife (9a, 9b, 9c) durch die mindestens eine Auswerteeinheit (7),
Bestimmung der durchschnittlichen Temperatur der mindestens einen Leiterschleife (9a, 9b, 9c) anhand der Widerstandsmessung.
